# EUROPEAN PATENT APPLICATION

(11) **EP 4 697 584 A1**
(43) Date of publication of application: **18.02.2026**
(21) Application number: 24194051.9
(22) Date of filing: 12.08.2024
(51) Int. Cl.: H02M 7/155, H02M 7/17, H02M 5/10, H02M 1/00, C25B 1/04

(54) **AN ELECTROLYZER POWER SUPPLY SYSTEM, A METHOD FOR OPERATING THE ELECTROLYSIS POWER SUPPLY SYSTEM, A COMPUTER PROGRAM, A COMPUTER-READABLE STORAGE MEDIUM, A CONTROLLER AND AN ELECTROLYSIS SYSTEM**

(71) Applicant: Siemens Energy Global GmbH & Co. KG, 81739 München (DE)
(72) Inventor: Loku, Fisnik, 90439 Nürnberg (DE); Lukianov, Semen, 91058 Erlangen (DE); Schumann, Sven, 91452 Wilhermsdorf (DE)

(57) **Abstract**

The present invention relates to an electrolyzer power supply system (1) which comprises a plurality of converters (2), wherein the respective converter (2) receives an alternating current electrical power input (3) and converts the alternating current electrical power input (3) into a direct current electrical power input (4) for an electrolyzer at a respective conversion rate (5). In order to control the plurality of converters (2) by means of one converter controller (6), a reference converter (7) having the highest or lowest alternating current input (4) is selected from the plurality of converters (2) and the conversion rate (5) of the reference converter (7) is controlled to a reference conversion rate (8). The respective conversion rate (5) of at least one of the respective converters (9) is controlled based on the reference conversion rate (8) and based on a tolerance parameter of an alternating current source (10).

## Description

### Technical Field

The present invention relates to an electrolyzer power supply system, a method for operating an electrolysis power supply system, a computer program, a computer-readable storage medium having stored thereon said computer program, a controller and an electrolysis system.

### Technological Background

Hydrogen electrolysis systems have high direct current power requirements, e.g. 7-10 kA. State-of-the-art thyristor rectifiers are used, mainly because of their efficiency and reliability. In order to minimize the current-harmonics generated, a so-called 24-pulse system is generally used for a single electrolysis system. Here the rectifiers are connected in parallel and each of the rectifiers is connected to a row of electrolyzer modules. Two adjacent rectifiers connected in parallel cancel their emitted lower current-harmonics, forming a 12-pulse system. Two 12-pulse systems cancel their emitted current-harmonics to form a 24-pulse system. These systems require special transformer systems with defined phase shifts between the secondary voltages. Assuming that the transformer losses, the secondary voltages of the transformer system(e.g. the delta- and the y-winding) and the additional phase shift of the respective transformer branch (**±7.5°**) are perfectly balanced among each other, all current-harmonics below the 23rd current-harmonic should be completely compensated in such a 24-pulse system and the first current-harmonics to appear would be the 23^{rd} current-harmonic. In real life, variations in transformer losses, secondary voltages and phase shifts are allowed. These deviations/tolerances, especially in the secondary voltage levels of the transformer, result in the need for a rectifier control unit for each individual rectifier of the 24-pulse system.

In addition, considering that the number of electrolysis systems installed in the existing transmission networks is constantly increasing, and in order to accelerate the production of green hydrogen, the capacity of electrolysis systems is expected to reach the Gigawatt range. At the same time, this would mean that a significant number of rectifier control systems would be required to meet the requirements of an interested grid operator.

Currently, a separate rectifier controller is used for each rectifier. The main reason for this is that on a direct current side of an electrolysis system, the electrolyzer module rows can be assumed to have similar aging and therefore similar current-voltage curve characteristics. To provide the required direct voltage, a firing angle would have to be controlled to match the alternating voltage input to the rectifiers.

### Summary of the invention

It is thus an object of the present invention to provide an improved electrolyzer power supply system and an improved method for operating the electrolysis power supply system.

A solution is provided by the subject matter according to the independent claims. Advantageous additional embodiments of the invention are described by the dependent claims, the following description and the figures.

The invention relates to an electrolyzer power supply system comprising a plurality of converters, wherein each of the respective converters is adapted to receive an alternating current electrical power input and to convert the alternating current electrical power input into a direct current electrical power input for an electrolyzer at a respective conversion rate.

According to the invention, the electrolyzer power supply system further comprises a converter controller which is adapted to control the conversion rate of a reference converter to a reference conversion rate and the respective conversion rate of at least one of the respective converters based on the reference conversion rate.

In other words, the electrolyzer power supply system may comprise a converter controller that is adapted to control the respective conversion rate of at least two converters of the plurality of converters, particularly based on a reference conversion rate of a reference converter. The at least one of the respective converters may be another converter than the reference converter and/or may be a converter different than the reference converter. The plurality of converters may comprise the at least one of the respective converters and the reference converter. The electrolyzer power supply system may be adapted to receive the alternating current electrical power input from an alternating current source, such as a transformer and/or an electrical grid and/or an electrical power station, to convert the alternating current electrical power input into the direct current electrical power input for at least one electrolyzer and to provide the electrical power input to the electrolyzer. The electrolyzer may be adapted to produce an energy carrier, such as hydrogen, using the electrical power input.

The electrolyzer power supply system may further be adapted to be electrically connected to the transformer or may comprise the transformer. The transformer may be adapted to provide the alternating current electrical power input from the electrical grid or the electrical power station to the plurality of converters, particularly at a medium or low voltage level.

The converter may be a rectifier, which optionally may be thyristor-based. The plurality of converters may be electrically connected in series and/or in parallel to the alternating current source. The conversion rate may be an operating point of the converter wherein the converter may convert a level of the alternating current electrical power input into a reference level of the direct current electrical power input. A relatively high conversion rate may correspond to converting a relatively high alternating current electrical power input into the reference direct current electrical power input, whereas a relatively low conversion rate may correspond to converting a relatively low alternating current electrical power input into the reference direct current electrical power input. For example, the conversion rate may correspond to multiplying a reference conversion rate by a constant value and/or correspond to adjusting the reference conversion rate by an offset, to adjusting a reference firing angle by a delta firing angle.

This provides the advantage that no individual converter controller for the respective converter is necessary for operating an electrolysis system comprising said electrolyzer power supply system. This leads to a decrease in overall costs of the electrolysis system, while a system performance is not affected. Furthermore, said electrolyzer power supply system can be used in different configurations which might require parallel operation of the converters to increase a current output on a direct current side or an electrolyzer side of the respective converter. Finally, a protection algorithm lined to the control system can remain unaffected, as the respective protection algorithm may mainly depend on measured signals of a current and/or voltage and/or a phase shift.

The electrolyzer power supply system also includes embodiments by which additional advantages are obtained.

In one embodiment, the converter controller is further adapted to determine the respective conversion rate of at least one of the respective converters based on a tolerance parameter, particularly of an alternating current source, which is adapted to provide the alternating current electrical power input to the reference converter and to at least one of the respective converters, and/or of the respective converter. In other words, the converter controller may be adapted to adjust the reference conversion rate to the respective conversion rate of at least one of the respective converters, particularly a firing angle difference between a respective firing angle of at least one of the respective converters and the reference firing angle of the reference converter, based on the tolerance parameter. The tolerance parameter may correspond to a deviation due to a current loss and/or voltage loss and/or a phase shift of the alternating current source.

For example, the tolerance parameter may correspond to one or more of a transformer loss and/or secondary voltage loss and/or a phase shift, particularly as defined by the standard IEC 60076 and/or IEC 61378. The transformer as alternating current source of the plurality of converters may comprise multiple windings and/or may comprise a plurality of multiple transformers, particularly a series of multiple transformers. Here, the windings of the transformer may have a deviation of an operating parameter of the transformer, such as one or more of a voltage, a current, an active power and a reactive power, on a converter side of the transformer where the converter is electrically connected to the transformer. The deviation of an operating parameter of the alternating current source may result in a different alternating current electrical power input at the respective converter which may require the respective converter of the plurality of converters to have a respective conversion rate in order to maintain an equal direct current electrical power input, in particular the reference direct current electrical power input. Determining the respective conversion rate based on the reference conversion rate may comprise determining a multiplication factor of the reference conversion rate and/or by adjusting the reference conversion rate by an offset, particularly by applying firing angle difference to the reference firing angle of the reference converter, based on the tolerance parameter.

This provides the advantage that the same reference direct current electrical power input for the electrolyzer can be provided by each converter having a different alternating current electrical power input.

Additionally or alternatively, the tolerance parameter may also correspond to an operating parameter difference of at least one of the respective converters in relation to the reference converter. This provides the advantage that tolerances between the reference converter and at least one of the respective converters can be compensated.

In one embodiment, the tolerance parameter is derived from calibration data and/or from a measurement of an operating parameter of the alternating current source and/or of the respective converter. In other words, the tolerance parameter may be calculated from a current loss and/or a voltage loss and/or a phase shift of the alternating current source, which particularly may be correspond to the standard IEC 60076 and/or IEC 61378. The calibration data may be obtained by means of a factory acceptance test of the alternating current source, in particular of a transformer, and/or of the corresponding converter 9 and/or by means of a simulation of a terminal behavior of the alternating current source and/or of the respective converter.

Optionally, the tolerance parameter may be updated by a measurement of the operating parameter of the alternating current source and/or of the respective converter, particularly by measurement of a real deviation of the current loss and/or the voltage loss and/or the phase shift to a respective nominal value.

This provides the advantage that deviations, for example due to an aging of the alternating current source and/or of the respective converter, can be compensated.

In one embodiment, the reference converter has a highest or lowest level of the alternating current electrical power input and/or a highest or lowest level of the direct current electrical power input among the plurality of converters, particularly a highest or lowest conversion rate. In other words, the converter may have the lowest or highest conversion rate, particularly the highest or lowest firing angle, among the plurality of converters. The highest or lowest conversion rate of the respective converter may correspond to converting the highest or lowest alternating current electrical power input into the reference direct current which may be the same for all converters of the plurality of converters. For instance, the reference converter may have the highest or lowest level of the alternating current electrical power input corresponding to the reference direct current electrical power input. Thus, at least one of the respective converters may have a higher or lower conversion rate than the reference converter. This provides the advantage that the reference converter and at least one of the respective converters can have an overall safety margin for the converter controller.

The invention further relates to a method for operating an electrolysis power supply system comprising a plurality of converters, wherein each of the respective converters receives an alternating current electrical power input and converts the alternating current electrical power input into a direct current electrical power input for an electrolyzer at a respective conversion rate, comprising the step of:
- Controlling the conversion rate of a reference converter to a reference conversion rate and the respective conversion rate of at least one of the respective converters based on the reference conversion rate.

In other words, the conversion rate of at least two controllers is controlled based on the reference conversion rate of the reference controller. Controlling the respective conversion rate of at least one of the respective converters may refer to determining a conversion rate difference to the reference conversion rate and adjusting the conversion rate of at least one of the respective converters based on the respective conversion rate difference and the reference conversion rate, particularly by multiplying the reference conversion rate by a respective fixed constant and/or by adjusting the reference conversion rate by an offset, particularly by adjusting the reference firing angle by a respective firing angle difference. The conversion rate difference may correspond to a difference between the respective alternating current electrical power input of at least one of the respective converters, such that all converters may output the reference direct current electrical power input for the electrolyzer. The at least one of the respective converters may be another converter than the reference converter and/or may be a converter different than the reference converter. The plurality of converters may comprise the at least one of the respective converters and the reference converter.

This provides the advantage that no individual converter controller for the respective converter is necessary for operating an electrolysis system comprising said electrolyzer power supply system. This leads to a decrease in overall costs of the electrolysis system, while a system performance is not affected. Furthermore, said electrolyzer power supply system can be used in different configurations which might require parallel operation of the converters to increase a current output on a direct current side or an electrolyzer side of the respective converter. Finally, a protection algorithm lined to the control system can remain unaffected, as the respective protection algorithm may mainly depend on measured signals of a current and/or voltage and/or a phase shift.

The method for operating an electrolyzer power supply system also includes embodiments by which additional advantages are obtained.

In one embodiment, the method further comprises the step of:
- Selecting the reference converter from the plurality of converters.

In other words, the converter from the plurality of converters having the highest or lowest alternating current electrical power input and/or the highest or lowest conversion rate may be determined to be the reference converter. In a master-slave controller architecture for example, the reference controller may be determined to be a master converter controller and at least one of the respective converter controllers to be a slave converter controller. This provides the advantage that the controller architecture, particularly a master-slave architecture, can be adapted to different system configurations.

In one embodiment, the respective conversion rate of at least one of the respective converters is further determined based on a tolerance parameter, particularly of an alternating current source, which provides the alternating current electrical power input to the reference converter and to at least one of the respective converters, and/or of the respective converter. In other words, a multiplication factor of the reference conversion rate and/or an offset to be applied to the reference conversion rate, particularly a firing angle difference to the reference firing angle of the reference converter, may be determined based on the tolerance parameter.

The tolerance parameter may be or correspond to a difference between the alternating current electrical power input that is provided to the reference converter and the respective alternating current electrical power input that is provided to at least one of the respective converters. For example, the tolerance parameter may correspond to a real deviation of one or more of a current, a voltage, an active power or a reactive power from their respective nominal value, particularly between windings of a transformer that are respectively electrically connected to the reference converter and at least one of the respective converters. Said tolerance parameter may be derived from or correspond to the standard IEC 60076 and/or IEC 61378. This provides the advantage that the same reference direct current electrical power input can be provided by each converter having a different alternating current electrical power input provided by a respective secondary winding on a converter side of the transformer.

Additionally or alternatively, the tolerance parameter may also correspond to an operating parameter difference of at least one of the respective converters in relation to the reference converter. This provides the advantage that tolerances between the reference converter and at least one of the respective converters can be compensated.

In one embodiment, the tolerance parameter is derived from calibration data and/or from a measurement of an operating parameter of the alternating current source and/or of the respective converter. In other words, the tolerance parameter may be determined from a current loss and/or a voltage loss and/or a phase shift of the alternating current source, which particularly may be derived from the standard IEC 60076 and/or IEC 61378. The calibration data may be derived from a factory acceptance test of the alternating current source, in particular of the transformer, and/or of the corresponding converter and/or by means of a simulation of a terminal behavior of the alternating current source and/or of the respective converter.

Optionally, the tolerance parameter may be updated by measuring the operating parameter of the alternating current source and/or of the respective converter, particularly by measuring a real deviation of the current loss and/or the voltage loss and/or the phase shift to a respective nominal value.

This provides the advantage that deviations, for example due to an aging or of the alternating current source and/or of the respective converter, can be compensated.

In one embodiment, the reference converter has a highest or lowest level of the alternating current electrical power input and/or a highest or lowest level of the direct current electrical power input among the plurality of converters, particularly a highest or lowest conversion rate. In other words, the reference converter may have a highest or lowest conversion rate, particularly a highest or lowest firing angle, among the plurality of converters. The highest or lowest conversion rate of the respective converter may correspond to converting the highest or lowest alternating current electrical power input into the reference direct current electrical power input which optionally may be the same for all converters of the plurality of converters. Thus, at least one of the respective converters may have a higher or lower conversion rate than the reference converter. For example, the reference converter may have the highest or lowest firing angle among the plurality of converters. This provides the advantage that the reference converter and at least one of the respective converters can have a safety margin for the converter controller.

The invention further relates to a computer program comprising instructions which, when the program is executed by a controller, particularly a converter controller, cause the controller to carry out the steps of said method. The controller may comprise means to execute said method, particularly means adjust a conversion rate of the converter, particularly of a rectifier, for adjusting and/or providing the reference direct current electrical power input for an electrolyzer.

The invention also relates to a computer-readable storage medium having stored thereon said computer program. In other words, the computer-readable storage medium may be a punched card, a (floppy) disk storage medium, a hard disk, a CD, a DVD, an USB (Universal Serial Bus) storage device, a RAM (Random Access Memory), a ROM (Read Only Memory) and/or an EPROM (Erasable Programmable Read Only Memory). Preferably, the computer-readable storage medium may be a RAM or a ROM, wherein particularly a flash memory is used. The computer readable-storage medium may also be a data communication network which allows downloading a program code, such as the Internet for example.

The invention further relates to a controller, particularly a converter controller, comprising said computer-readable storage medium having stored thereon said computer program. The controller may be programmable logic controller (PLC). The controller may comprise at least one processor and said computer-readable storage medium, wherein the computer-readable storage medium comprises said computer program which, when executed by the at least one processor, cause the controller to perform the method as described above.

In other words, the at least one processor may be a microprocessor and/or a microcontroller and/or a FPGA (Field Programmable Gate Array) and/or a DSP (Digital Signal Processor).

The controller may comprise means to execute said method, particularly means adjust a conversion rate of the converter, particularly of a rectifier, for adjusting and/or providing the reference direct current electrical power input for an electrolyzer, particularly means to convert an alternating current electrical power output from an electrical power source into a direct current electrical power input for the electrolyzer.

Additionally or alternatively, the converter may comprise means to drop and/or boost the direct current electrical power input corresponding to an operating point of the electrolyzer. The controller may further comprise means to activate and/or deactivate a switch, particularly a thyristor, of the respective converter.

The invention also relates to an electrolysis system comprising said controller and/or said electrolyzer power supply system. The electrolysis system may comprise an electrolyzer and said electrolyzer power supply system. The electrolysis system may further comprise the alternating current source or be electrically connected thereto, particularly by means of a transformer.

The invention also relates to realizations comprising a combination of the features of several of the described embodiments.

### Brief description of the drawings

The present disclosure will be more readily appreciated by reference to the following detailed description when being considered in connection with the accompanying drawings in which:
- Figure 1: shows a schematic view of an electrolyzer power supply system comprising a plurality of converters, particularly rectifiers, that are controlled by one controller; and
- Figure 2: schematically shows a flow diagram of a method for controlling the electrolyzer power supply system by a single converter controller.

In the following, the invention will be explained in more detail with reference to the accompanying figure. In the Figures, like elements are denoted by identical reference numerals and repeated description thereof may be omitted in order to avoid redundancies.

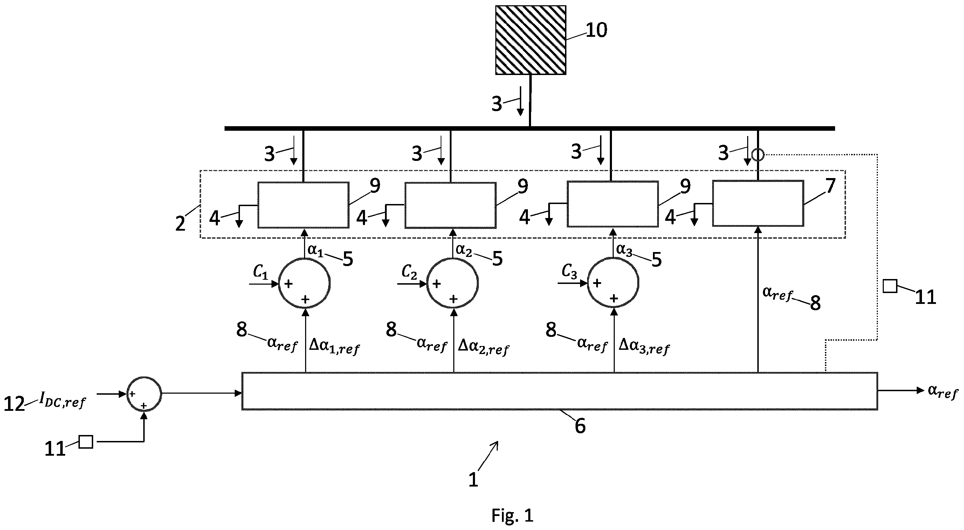

Figure 1 shows an electrolyzer power supply system 1 which is adapted to receive an alternating current electrical energy input 3 from an alternating current source 10. The alternating current source 10 may be a transformer and/or an electrical power station or an electrical grid. The electrolyzer power supply system 1 comprises a plurality of converters 2, wherein the plurality of converters 2 is adapted to receive the alternating current electrical power input 3 from the alternating current source 3. The respective converter 7 and 9 is adapted to convert the alternating current electrical power input 3 into a direct current electrical power output 4 for an electrolyzer (not shown!). For this, the respective converter 7 and 9 may further be electrically connected to a respective electrolyzer.

An electrolysis system comprising said electrolyzer power supply system 1 may comprise a number i of electrolyzers which corresponds to the number i of converters 7 and 9 of the plurality of converters 2, wherein it is assumed that each electrolyzer may require the same direct current electrical power input 4, particularly the same reference direct current electrical power input 4.

Due to tolerances of the alternating current source 10, particularly a deviation of a real current and/or a real voltage and/or a real phase shift and/or a real active power and/or a real reactive power from a respective nominal value, the alternating current electrical power input 3 that is received by the respective converter 7 and 9 may have different levels. In case that each electrolyzer that is electrically connected to the respective converter 7 and 9 may require the same direct current electrical power input 4, the respective converter 7 and 9 may have a respective conversion level of converting the respective alternating current electrical power input 3 into the direct current electrical power input 4 which normally is controlled by a respective converter controller 6 in order to balance those deviations.

In order to control at least two converters 7 and 9 by means of a single converter controller 6, the converter controller 6 of a reference converter 9 controls the conversion level of a reference converter 7 and of at least one of the respective converters 9 from the plurality of converters 2 such that the direct current electrical power output 4 remains the same at each converter 7 and 9.

For this, the reference converter 7 having a reference conversion rate 8 is determined, wherein the converter 7 and 9 having the highest or lowest conversion rate may be determined to be the reference converter 9, particularly by the converter controller 6 which optionally may be a master controller in a master-slave controller architecture. For example, the converter 7 having the firing angle **α*_{ref}*** is selected to be the reference converter 7, wherein the firing angle may denote the reference conversion rate 8 for a thyristor-based converter 7 and 9. Here, the firing angle **α*_{ref}*** of the reference conversion rate 8 may correspond to the highest or lowest firing angle **α₁,α₂,α₃** among the plurality of converters 2. The selection of the reference converter 7 may be based on the tolerance parameter of the alternating current source 10.

Alternatively, the converter 7 and 9 may be determined to be the reference converter 7 which has the highest or lowest alternating current electrical power input 3 among the plurality of converters 2.

The converter controller 6 of the reference converter 7 determines the reference conversion rate 8 based on the alternating current electrical power input 3 at the reference converter 7 and the reference direct current electrical power input 12 which may optionally be the same for all electrolyzes.

Additionally or alternatively, the reference conversion rate 8 may be based on a measured operating parameter of the alternating current source 10, such as an operating parameter 11 of a transformer. The operating parameter 11 of the transformer may be one or more of a current, a voltage, an active and a reactive power, a phase shift, particularly on a converter side of the transformer. The operating parameter 11 may particularly be a deviation of one or more of a measured current, a measured voltage, a measured active power, a measured reactive power and a measured phase shift from a respective nominal value thereof.

Based on the highest or lowest alternating current input 3 and the reference direct current electrical power input 12 and optionally the measured operating parameter 11, the converter controller 6 determines the reference conversion rate 8, particularly the reference firing angle **α*_{ref}*.**

Based on the reference conversion rate 8, the converter controller 6 also determines the respective conversion rate 5 of at least one of the respective converters 9 of the plurality of converters 2, particularly the respective firing angle **α₁,α₂,α₃** of at least one of the respective converters 9.

For this, the reference conversion rate 8 may be multiplied by a respective constant ***C*₁,*C*₂,*C*₃** based on the tolerance parameter of the alternating current source 10 and/or of the respective converter 9 and optionally based on the measured operating parameter 11 in order to obtain the respective conversion rate 5 of at least one of the respective converters 9. For this, the converter controller 6 may be a P-controller.

Additionally or alternatively, the converter 6 determines an offset between the respective conversion rate 5 of at least one of the respective converters 9 and the reference conversion rate 8. The reference conversion rate 8 is adjusted by the offset in order to obtain the respective conversion rate 5 of at least one of the respective converters 9, particularly by adding the offset to the reference conversion rate 8 or by subtracting the offset from the reference conversion rate 8. For example, the respective firing angle ***α*₁,*α*₂,*α*₃** may be determined by the converter controller 6 based on the reference firing angle ***α_{ref}.*** The converter 6 determines and/or controls the respective firing angle ***α*₁,*α*₂,*α*₃** of at least one of the respective converters 9 by adjusting the reference firing angle ***α_{ref}*** by said firing angle difference **Δ*α*_{1,*ref*}**, **Δ*α*_{2,}*****_{ref}**,* **Δ*α*_{3,}*_{ref},*** particularly by adding the firing angle difference **Δ*α*₁,Δ*α*_{2,}*_{ref},*Δ*α*_{3,*ref*}** to the reference firing angle ***α_{ref}*** or by subtracting the firing angle difference **Δ*α*_{1,*ref*}**, **Δ*α*_{2,}*****_{ref}**,* **Δ*α*_{3,*ref*}** from the reference firing angle ***α_{ref}.*** For this, the converter controller 6 may be a PI-controller.

The respective constant ***C*₁,*C*₂,*C*₃** and/or the respective offset, particularly the firing angle difference **Δ*α*_{1,}*****_{ref}**,* **Δ*α*_{2,}*****_{ref}**,* **Δ*α*_{3,}*_{ref},*** is determined based on the tolerance parameter of the alternating current source 10, particularly based on the operating parameter 11, and/or of at least one of the respective converters 9. The tolerance parameter may particularly be derived from calibration data of the alternating current source 10 and/or of at least one of the respective converters 9 and/or from a measurement of the operating parameter 11.

For example, the calibration data can be obtained by means of a factory acceptance test of the alternating current source 10, in particular of a transformer, and/or of the corresponding converter 9. During said factory acceptance test, for example, the voltage levels resulting from the manufacturing of the transformer can be precisely measured. Using simulation environments (e.g. Matlab-Simulink, PSCAD, etc.), this deviation of a voltage on a converter side of the transformer can be used to calculate the exact firing angle ***α*₁,*α*₂,*α*₃** that would result from a corresponding controller unit. The controller of the reference rectifier unit 7 may be adapted to determine the reference firing angle **α*_{ref}*** for the reference rectifier unit 7 and after determining the firing angle ***α_{ref}**,* a fixed constant ***C*₁,*C*₂,*C*₃** or a formula is added to the reference firing angle ***α_{ref},*** which can then be provided as a reference value **α₁,α₂,α₃** to at least one of the respective rectifier units 9.

Thus, the converter controller 6 can simultaneously control the plurality of converters 2 and obtain the same reference direct current electrical power input 4 and 12 although the respective converter 7 and 9 has a different alternating current electrical power input 3.

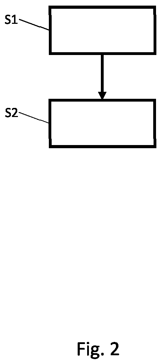

Figure 2 schematically shows a flow diagram of a method for controlling the electrolyzer power supply system 1 by one converter controller 6.

In an optional first step S1, the reference converter 7 is determined from the plurality of converters 2. The reference converter 7 may be the converter having the highest or lowest alternating current electrical power input 3 among the plurality of converters 2. For instance, the converter 7 and 9 having the highest or lowest firing angle **α*_{ref}*** may be determined to be the reference converter 7. For example, the converter 7 and 9 having the highest alternating current electrical power input 3 may be the converter 7 having the lowest firing angle **α*_{ref}*** or the converter 7 and 9 having the lowest alternating current electrical power input 3 may be the converter 7 having the highest firing angle ***α_{ref}.***

Step 1 may be performed once based on the tolerance parameter of the alternating current source 10, where a branch of the alternating current source 10 is determined that has the highest or lowest alternating current electrical power input 3. For example, step 1 may be performed in determining the master controller in a master-slave controller architecture.

In a second step S2, the conversion rate 8 of the reference converter 7 is controlled to a reference conversion rate 8 and the respective conversion rate 5 of at least one of the respective converters 9 is controlled based on the reference conversion rate 8.

Based on the highest or lowest alternating current input 3 and the reference direct current electrical power input 12 and optionally the measured operating parameter 11, the converter controller 6 determines the reference conversion rate 8, particularly the reference firing angle **α*_{ref}*.**

Based on the reference conversion rate 8, the converter controller 6 also determines the respective conversion rate 5 of at least one of the respective converters 9 of the plurality of converters 2, particularly the respective firing angle **α₁,α₂,α₃** of at least one of the respective converters 9.

For this, the reference conversion rate 8 may be multiplied by a respective constant ***C*₁,*C*₂,*C*₃** based on the tolerance parameter of the alternating current source 10 and/or of at least one of the respective converters 9 and optionally based on the measured operating parameter 11 in order to obtain the respective conversion rate 5 of at least one of the respective converters 9.

Additionally or alternatively, the converter 6 determines an offset between the respective conversion rate 5 of at least one of the respective converters 9 and the reference conversion rate 8. The reference conversion rate 8 is adjusted by the offset in order to obtain the respective conversion rate 5 of at least one of the respective converters 9, particularly by adding the offset to the reference conversion rate 8 or by subtracting the offset from the reference conversion rate 8. For example, the respective firing angle ***α*₁,*α*₂,*α*₃** may be determined by the converter controller 6 based on the reference firing angle ***α_{ref}.*** The converter 6 determines and/or controls the respective firing angle ***α*₁,*α*₂,*α*₃** of at least one of the respective converters 9 by adjusting the reference firing angle ***α_{ref}*** by said firing angle difference **Δ*α*_{1,}*****_{ref}**,* **Δ*α*_{2,}*****_{ref}**,* **Δ*α*_{3,}*_{ref},*** particularly by adding the firing angle difference **Δ*α*_{1,*ref*},Δ*α*_{2,}*_{ref},*Δ*α*_{3,*ref*}** to the reference firing angle ***α_{ref}*** or by subtracting the firing angle difference **Δ*α*_{1,}*****_{ref}**,* **Δ*α*_{2,}*****_{ref}**,* **Δ*α*_{3,*ref*}** from the reference firing angle ***α_{ref}.***

The respective constant ***C*₁,*C*₂,*C*₃** and/or the respective offset, particularly the firing angle difference **Δ*α*_{1,}*****_{ref}**,* **Δ*α*_{2,}*****_{ref}**,* **Δ*α*_{3,}*****_{ref}**,* is determined based on the tolerance parameter of the alternating current source 10, particularly based on the operating parameter 11, and/or of at least one of the respective converters 9. The tolerance parameter may particularly be derived from calibration data of the alternating current source 10 and/or of at least one of the respective converters 9 and/or from a measurement of the operating parameter 11.

The present example proposes thus to use a single converter controller for the whole electrolysis system involving more than one (preferably 2 - 8) converters (rectifiers), as described exemplarily. However, this example is not limited to only 24-pulse electrolysis system operation but can be applied to other configurations as well.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

## Claims

1. Electrolyzer power supply system (1) comprising a plurality of converters (2), wherein each of the respective converters (2) is adapted to receive an alternating current electrical power input (3) and to convert the alternating current electrical power input (3) into a direct current electrical power input (4) for an electrolyzer at a respective conversion rate (5),
**characterized in that**
further comprising a converter controller (6) which is adapted to control the conversion rate (5) of a reference converter (7) to a reference conversion rate (8) and the respective conversion (5) rate of at least one of the respective converters (9) based on the reference conversion rate (8).

2. Electrolyzer power supply system (1) according to claim 1, **characterized in that** the converter controller (6) is further adapted to determine the respective conversion rate (5) of at least one of the respective converters (9) based on a tolerance parameter, particularly of an alternating current source (10), which is adapted to provide the alternating current electrical power input (3) to the reference converter (7) and to at least one of the respective converters (9), and/or of the respective converter (7, 9).

3. Electrolyzer power supply system (1) according to claim 2, **characterized in that** the tolerance parameter is derived from calibration data and/or from a measurement of an operating parameter (11) of the alternating current source (10) and/or of the respective converter (7, 9).

4. Electrolyzer power supply system (1) according to one of the preceding claims, **characterized in that** the reference converter (7) has a highest or lowest level of the alternating current electrical power input (3) and/or a highest or lowest level of the direct current electrical power input (4) among the plurality of converters (2), particularly a highest or lowest conversion rate (8).

5. Method for operating an electrolysis power supply system (1) comprising a plurality of converters (2), wherein each of the respective converters (2) receives an alternating current electrical power input (3) and converts the alternating current electrical power input (3) into a direct current electrical power input (4) for an electrolyzer at a respective conversion rate (5), comprising the step of:
- Controlling the conversion rate (5) of a reference converter (7) to a reference conversion rate (8) and the respective conversion rate (5) of at least one of the respective converters (9) based on the reference conversion rate (8).

6. Method according to claim 5, **characterized in that** further comprising the step of:
- Selecting the reference converter (7) from the plurality of converters (2).

7. Method according to claim 5 or 6, **characterized in that** the respective conversion rate (5) of at least one of the respective converters (9) is further determined based on a tolerance parameter, particularly of an alternating current source (10), which provides the alternating current electrical power input (3) to the reference converter (7) and to at least one of the respective converters (9), and/or of the respective converter (7, 9) .

8. Method according to claim 7, **characterized in that** the tolerance parameter is derived from calibration data and/or from a measurement of an operating parameter (11) of the alternating current source (10) and/or of the respective converter (7, 9).

9. Method according to one of the claims 5 to 8, **characterized in that** the reference converter (7) has a highest or lowest level of the alternating current electrical power input (3) and/or a highest or lowest level of the direct current electrical power input (4) among the plurality of converters (2), particularly a highest or lowest conversion rate (8).

10. Computer program comprising instructions which, when the program is executed by a controller (6), particularly by a converter controller (6), cause the controller (6) to carry out the steps of the method according to one of the claims 5 to 9.

11. Computer-readable storage medium having stored thereon the computer program of claim 10.

12. Controller (6), particularly a converter controller (6), comprising a computer-readable storage medium having stored thereon the computer program of claim 10 and optionally means to execute the method according to one of the claims 5 to 9.

13. Electrolysis system comprising the controller (6) of claim 12 and/or the electrolyzer power supply system (1) according to one of the claims 1 to 4.
